# EUROPEAN PATENT SPECIFICATION

(11) **EP 3 006 347 B1**
(45) Date of publication and mention of the grant of the patent: **28.09.2016**
(21) Application number: 14188501.2
(22) Date of filing: 10.10.2014
(51) Int. Cl.: B64F 1/34

(54) **ENHANCED CANOPY FOR MOBILE GROUND POWER UNIT**
VERBESSERTE HAUBE FÜR EINE MOBILE BODENVERSORGUNSEINHEIT
AUVENT AMÉLIORÉ POUR UNITÉ MOBILE D'ALIMENTATION

(43) Date of publication of application: 13.04.2016
(73) Proprietor: Illinois Tool Works Inc., Glenview, IL 60025 (US)
(72) Inventor: Tindall, Leslie, Ashford kent TN23 1DZ (GB)
(74) Representative: Verbrugge, Vivien François Emeric

(56) References cited:
- EP-A2- 1 124 046
- GB-A- 1 412 216
- US-A- 4 243 893

## Description

This invention relates to ground power units (GPU) for supplying power to an aircraft parked on the ground.

Such a ground power unit is disclosed in US 5,253,891 A. It usually comprises an engine, driving an electric generator, both inserted in a housing to protect it from environmental influences. Such housings traditionally consist of many different parts and of bent steel.

The inventor found it very disadvantageous that the housing normally does not have good sound damping characteristics and good air flow at the same time, without spending much effort in additional hose and air duct components.

Documents GB1412216, EP1124046 and US4243893 relate to double walled housings for power units.

The object of the invention therefore was to provide a housing, that has good characteristics, esp. considering sound damping, and that allows for a good ventilation of the engine and the generator.

This object is achieved by the subject matter of the independent claims; preferred embodiments are specified by the dependent claims.

Particularly, this object is achieved by a mobile ground power unit according to claim 1 and to a canopy as a component of a housing for a ground power unit, according to claim 13.

Thereby, on the one hand an acoustic damping or enhanced security is achieved; on the other hand, the hollow space may be used for further functions like cooling or even cable trimming. Preferably, the hollow space contains one or more cables (therefore, cables are easily trimmable) and/or damping material (very high acoustic damping) and/or a ducting system.

Preferably, the mobile ground power stands on wheels. Usually, it is equipped with a towing arm. The GPU is preferably set up to output 28 V of direct current and/or 115 V 400 Hz of alternating current. Preferably, the electric energy is carried from a generator to a connection on the aircraft via cables, for example a 3 phase 4-wire insulated cable capable of handling 261 A (90 kVA).

Preferably, the housing of the ground power unit is a component or group of components that surrounds the engine and/or the generator at least partially, particularly at the sides and/or the top of engine and/or generator. The housing is preferably the outer shell of the ground power unit.

The one area consisting of a single piece that is covering an upper side of the engine and extends at least two different vertical sides of the ground power unit has the advantage that no connections, hinge-joints or crevices disrupt the canopy and therefore, noise cannot escape through such disruptions. The single piece is preferably extending from the bottom of the canopy at one lateral side up, it extends then horizontally over the engine and/or generator and it further extends down to the opposite buttom of the canopy. Preferably, it also extends from the horizontal area further backwards, forming a third vertical area.

Preferably, the canopy covers at three vertical sides of the engine and/or generator.

In a further preferred embodiment of the GPU or the canopy according to the present invention, the inner wall features a horizontal area covering the upper side of the engine.

Thereby, the damping effect is present along the top part of the canopy.

In a further preferred embodiment of the GPU or the canopy according to the present invention, the inner wall is extending from the horizontal area downwards along at least one (preferably two or three) vertical side of the ground power unit (preferably of the engine and/or generator).

Thereby, the damping effect is even more enhanced, as at the vertical sides, noise is being damped, too.

In a further preferred embodiment of the GPU or the canopy according to the present invention, the inner wall is opposing the outer wall on more than 75 % of the outer wall's inner surface area.

Having an inner wall that extends over such a high fraction of the inner surface of the outer wall provides particularly good damping results.

In a further preferred embodiment of the GPU or the canopy according to the present invention, the canopy consists of one single piece.

Thereby, the assembly is quicker, as the canopy including the inner wall providing the damping effect does not need to be put together from multiple parts. Furthermore, robustness is increased and as there are no connections between parts, there are no possible leaks for noise to escape. Preferably, the canopy is manufactured by rotor molding or rotor casting.

In a further preferred embodiment of the GPU or the canopy according to the present invention, the canopy is configured to slide on the chassis or on another housing part or part of the GPU so as to be retractable by a sliding movement.

The canopy, especially the canopy having the sliding design, offers the benefit of a fast easy access to servicing points and of an easy removal for major work and access to the generator.

Such hollow shapes are particularly well suited to be produced by rotor molding/casting, and therefore, the canopy is preferably a rotor molded or rotor cast component.

In a further preferred embodiment of the GPU or the canopy according to the present invention, the canopy comprises an integrated ducting system, whereby the ducting system comprises an inlet opening within the outer wall of the canopy.

Thereby, fresh air can be taken from outside and can be guided and distributed through the ducting system. Preferably, the hollow space constitutes an air channel for exchanging fluid between the inside and the outside of the housing.

Preferably, the ducting system comprises at least one duct, common for two or more purposes (e.g. forwarding air to the engine intake for the combustion process and for cooling the engine).

In a further preferred embodiment of the GPU or the canopy according to the present invention, the ducting system comprises two or more ducts that are - within the canopy - separate from each other.

Thereby air can be drawn in at different velocity, depending on the need of the air (e.g. for the combustion process or for a cooling process).

In a further preferred embodiment of the GPU or the canopy according to the present invention, the inlet opening is located in an approximately vertical or projecting or downward facing part of the outer wall.

Thereby, a better rain protection of the inlet opening is provided, and no protruding rain cowls for the opening are necessary.

In a further preferred embodiment of the GPU or the canopy according to the present invention, the ducting system comprises at least one exhaust opening within the inner wall of the canopy.

Thereby, the fresh air that has come through the inlet opening can be exhausted into the inner space of the housing.

Preferably, the exhaust opening is located vis-à-vis an air-intake of the engine, esp. combustion engine, e.g. vis-à-vis the air filter intake. Thereby, air can be exhausted from the hollow space of the canopy into the air intake filter. Induction air quality is vital for efficient and reliable operation of modern internal combustion engines. The air must be dry, clean and cool to satisfy the engine manufacturers' installation requirements. Taking the air from inside the housing will provide clean, dry air but the air in the housing usually 5-10 degrees warmer than the ambient air. This will reduce the limited ambient temperature range at which the machine will operate before the over temperature protection shuts the engine down. By using the hollow canopy as an air duct, the air can be taken from outside the housing without the need of a rain cowl and - if wanted - even without further separate ducting components.

Thereby, the air at the engine intake can be maintained at near ambient air temperature, it can be maintained dry, one may not use further separate ducting components, no components projecting above canopy that can be damaged are needed and it can be made use of the hollow space of the roto-molded/cast canopy.

In a further preferred embodiment of the GPU or the canopy according to the present invention, the exhaust opening is located within the horizontal area of the inner wall.

Thereby, fresh air can be distributed along the horizontal area and let out at specific location above the engine/generator. This offers flexibility in choosing the areas to direct fresh air to and on the other hand, as fresh air is usually colder and tends to fall down to the desired area (e.g., air intake or engine surrounding), the air flow is very beneficial.

In a further preferred embodiment of the GPU or the canopy according to the present invention, the inlet opening and the exhaust opening are offset from each other (such that they are not vis-à-vis or concentrically or even not overlapping or even further no line of sight between inlet and exhaust opening).

Thereby, the inlet and outlet are at different locations of the canopy, such that air can be inlet where it is best suitable, and air can be exhausted, where the air is needed. This minimizes the need for hoses or other ducting means inside the housing, as a part of the housing - the canopy - takes over this function.

In a further preferred embodiment of the GPU or the canopy according to the present invention, the exhaust opening is located above and/or at the side of the engine.

Thereby, an advantageous cooling of the engine is achieved. Internal engines, especially combustion engines, produce a considerable amount of waste heat which is dissipated via a liquid cooler and very often a charge air cooler mounted in front of the engine. Air is blown across these coolers by a fan driven off the engine. This cooling air is normally drawn in at the generator end of a GPU, across the engine and out through the cooling pack. When the air reaches the cooling pack it has increased in temperature by up to 10 degrees due to the waste heat from the generator and the engine. There is also a radiation heating effect on the inside surfaces of the canopy. The area directly above the engine is where the highest surface temperatures are measured. To maintain the structural integrity of a polyethylene canopy it is best practice to keep the surface temperature below 70° C. By drawing cooling air through the hollow part of the canopy it is possible to direct air at near ambient temperature to the area above or at the side of the engine.

When the exhaust opening is located above the engine, an additional benefit is that near ambient air is delivered to the top part of the cooling pack where the highest temperatures are present. This improves the performance of the cooling pack and raises the limited ambient temperature range of the machine. There are also acoustic benefits from having a complex air intake duct. There is no direct line of sight to the engine or cooling fan which are the main noise sources on a GPU.

In a further preferred embodiment of the GPU or the canopy according to the present invention the exhaust opening is covered by a heat shield which is permeable to air.

Thereby, the heat shield protects the inner canopy surface from the direct radiant heat. The heat shield is preferably made of metal, e.g. a metal louvered or perforated plate or mesh.

In a further preferred embodiment of the GPU or the canopy according to the present invention, the exhaust opening is surrounded by a seal, which connects to an air intake of the combustion engine.

Thereby, the efficiency of providing ambient dry air to the engine is increased. The sealing is preferably a soft rubber or neoprene sealing. It may be fixed to the exhaust opening or to the air intake opening of the engine. Preferably, the canopy is a sliding canopy and the seal is automatically put in position when the canopy is closed.

In a further preferred embodiment of the GPU or the canopy according to the present invention, the ducting system comprises at least two exhaust openings, wherein one of the exhaust openings (which is preferably covered by the heat shield) is set up for providing cooling air to the surrounding of the engine, whereas another of the exhaust openings (which is preferably surrounded by a seal which connects to the air intake) is set up to specifically direct air into the air intake of the engine.

Thereby, on the one hand, cooling air is provided for the engine, on the other hand, specifically provisioned air for the engine air intake is provided. This enhances the cooling of and air supply for the engine.

In a further preferred embodiment of the GPU or the canopy according to the present invention, the inlet opening is located on one end of the ground power unit, wherein this one end is vis-à-vis an other end of the ground power unit, wherein the other end of the ground power unit comprises a housing exhaust, set up for letting escape used air out of the housing.

Thereby, an airflow through the ground power unit is provided that does not need to change direction laterally and hence, the flow resistance is low. In this set up, the engine is between the inlet opening and the housing exhaust. At the housing exhaust there is preferably a ventilator of the liquid cooling circuit of the engine.

In a further preferred embodiment of the GPU according to the present invention, the ground power unit comprises a fuel tank, wherein the fuel tank comprises a wall that forms at least one channel that allows air to pass from one side of the fuel tank to another side of the fuel tank. In another preferred manufacturing method, the manufacturing includes building and/or mounting a corresponding fuel tank.

Thereby, dry clean and cool air can be drawn from below the GPU without spending much more space for suitable ducting components, as the tank itself acts as a ducting component. Furthermore, the air passing the fuel tank is cooling the fuel inside the fuel tank.

The generator in a GPU requires dry, clean and cool air for cooling. A large volume of air is required which means that the precipitation can be drawn in if the intake opening is exposed to the weather. Another issue with modern diesel engines is keeping the fuel cool. Diesel fuel is used as a coolant to cool the injector pump and is returned warm to the fuel tank. The fuel returning from the injector pump gradually increases the temperature of the tank. If the fuel temperature exceeds the limits defined by the engine manufacturer then an additional fuel intercooler is required. By drawing the generator cooling air through a, preferably molded, duct in the fuel tank it is possible to remove heat from the fuel without having to add a separate cooler to the fuel circuit.

Preferably, the fuel tank is a rotor molded or rotor cast component. One of the down sides of using polyethylene tanks is that the material insulates the fuel better than steel tanks and it is more likely that fuel coolers are required. However, by incorporating the channel into the fuel tank, this down side is compensated for and one can on the other side benefit from the advantages a rotor molded / cast component offers (e.g., low cost, impact resistance, chemical resistance, etc.). Therefore, one can use a rotor molded/cast tank, esp. Polyethylene tank, without increasing the fuel temperature.

Preferably, the other side of the fuel tank is a side approximately perpendicular to the one side, particularly preferable it is the other side of the fuel tank is approximately parallel vis-à-vis the one side. Preferably, the tank is located below generator and engine.

Preferably, the channel is located in the tank at a position that is - when the tank is disposed inside the housing of the GPU - below and vis-à-vis the generator or below and at one side of the generator such that the generator is in between the channel and an ventilator and therefore and air stream will hit the generator. Particularly preferably, the channel is positioned precisely at a generator air intake.

Especially in this case, the positive synergetic effect should be emphasized that is present between the feature of the fuel tank having a channel and the feature of the canopy having a ducting system. By this combination, air can be drawn inside the housing from different inlets using (also) a common ventilator, usually the ventilator of the liquid cooling system of the engine.

In a further preferred embodiment according to the present invention the wall of the fuel tank is surrounding the channel except for an inlet opening and an outlet opening of the channel.

Thereby, the effective surface for cooling the fuel is high. The channel is completely passing through the tank which also provides for an advantageous air flow.

In a further preferred embodiment according to the present invention the channel has an inlet on the bottom side of the fuel tank and an outlet on the top side of the fuel tank.

Thereby, cool dry air is able to enter from below and to be drawn through the tank vertically. This enables an effective air flow with short flow distances.

Embodiments of the present invention will now be described - by way of example only - with reference to the accompanying drawings, whereby
Fig. 1 a is a sketch of a GPU according to the invention, having a canopy according the invention,
Fig. 2a-2g are drawings of a GPU according to the invention based on Fig. 1 a and incorporating as well many of the advantageous preferred features.

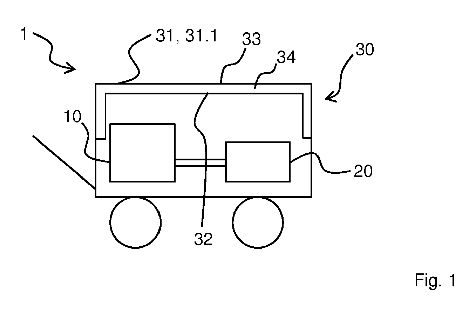

**Fig. 1** **is** showing a side view of a GPU 1 according to the invention having a canopy 31.1 according the invention. The GPU 1 comprises an engine 10 and an electric generator 20. The electric generator 20 is configured to be driven by the engine. The GPU comprises a housing 30 whereby the engine 10 and the electric generator 20 are disposed within the inside of the housing 30, which features the canopy 31.1 as a component 31. This component 31 is preferably rotor molded or rotor cast. The canopy 31.1 comprises an inner wall 32 facing inside the housing 30 and an outer wall 33 facing outside the housing 30, wherein the inner wall 32 and the outer wall 33 define a hollow space 34 between each other. The outer wall 33 is having an area consisting of a single piece that is covering an upper side - here all the upper side - of the engine 10 and in this case also of the generator 20 and that extends downwards along at least two different vertical sides of the ground power unit 1.

This allows to have a GPU with a canopy that serves more than only covering from rain. It may also serve as sound damper, or duct system for fresh air.

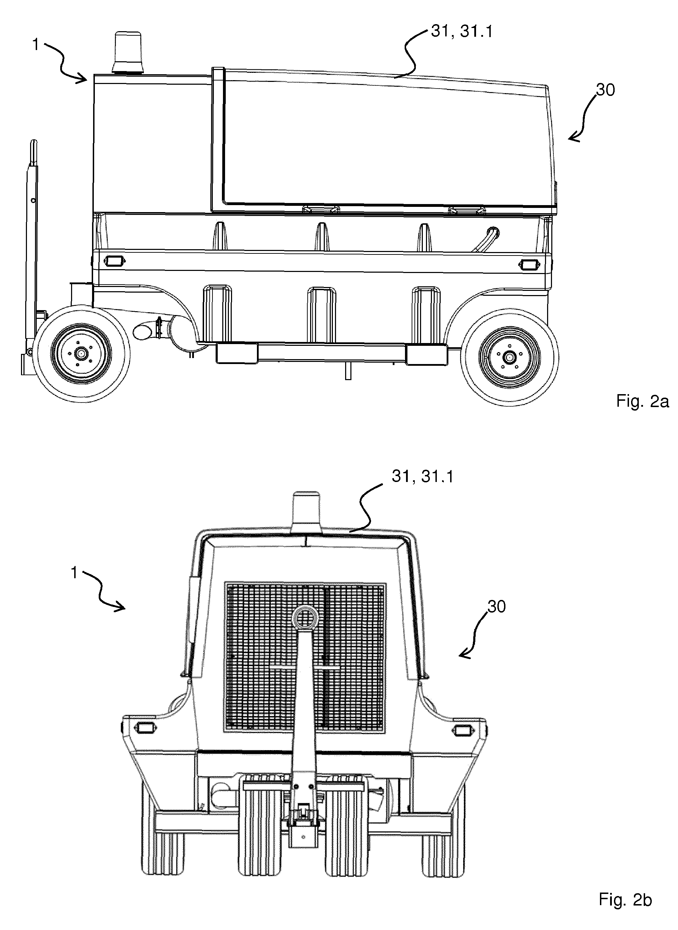

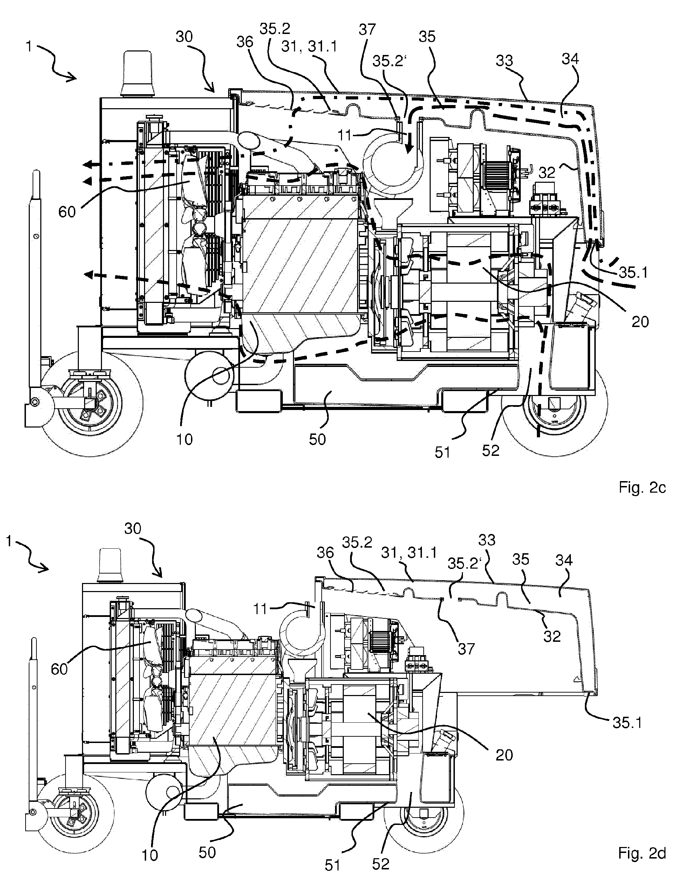

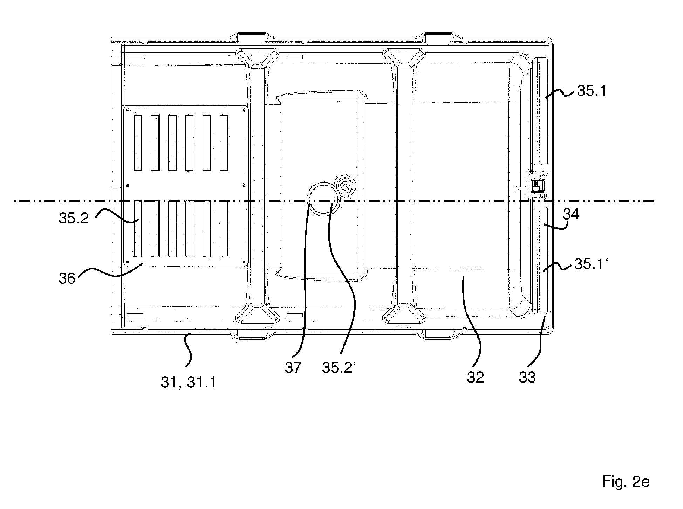

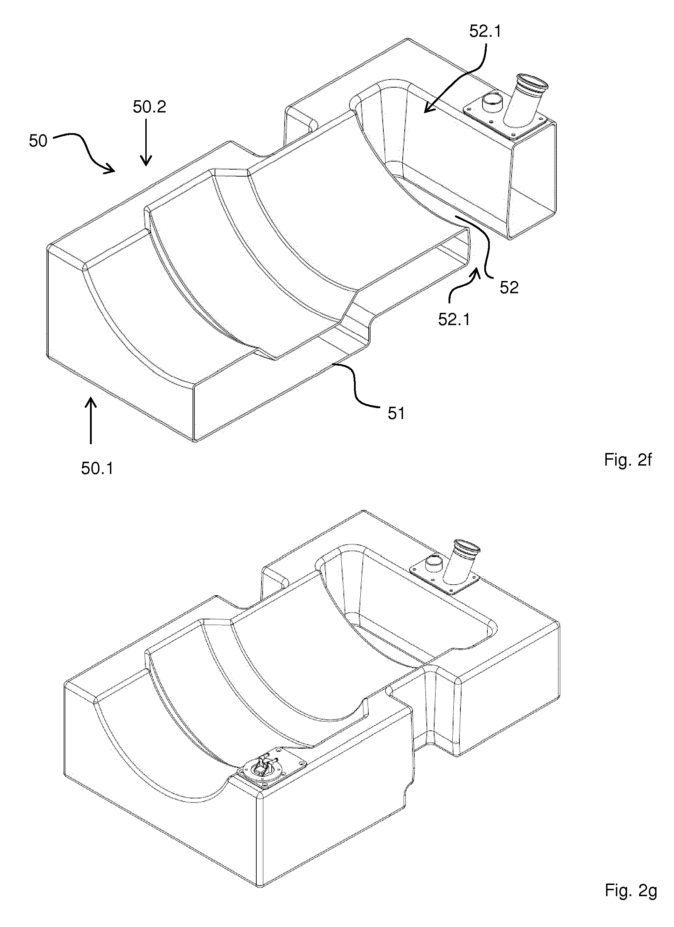

Fig. 2a-2g are showing a GPU 1 according to the invention based on Fig. 1 a and 1 b incorporating as well many of the advantageous preferred features. Fig. 2a is a side view, Fig. 2b a frontal view, Fig. 2c and d cross-sectional views, wherein in Fig. 2d, the canopy is retracted, Fig. 2e a bottom view of only the canopy, wherein the approximate position of the section of Fig. 2c and d is marked by a dash-dot-dotted line, Fig. 2h a section through the fuel tank and Fig. 2i the complete fuel tank.

The housing 30 features as a component 31 a canopy 31.1, which preferably is rotor molded or rotor cast, and which covers at least the upper side of the engine 10 and the generator 20. The canopy 31.1 is configured to be slid off the engine 10 and the generator 20.

The canopy 31.1 comprises an inner wall 32 facing inside the housing 30 and an outer wall 33 facing outside the housing 30, wherein the inner wall 32 and the outer wall 33 define a hollow space 34 between each other. The outer wall 33 is having an area consisting of a single piece that is covering an upper side - here all the upper side - of the engine 10 and in this case also of the generator 20 and that extends downwards along three different vertical sides of the ground power unit 1. The inner wall 32 features a horizontal area covering the upper side of the engine 10 and is extending from the horizontal area downwards along three vertical sides of the ground power unit 1. The inner wall 32 is opposing the outer wall 33 on more than 75 % of the outer wall's 33 inner surface area. The canopy 31.1 consists of one single piece.

The canopy 31.1 comprises an integrated ducting system 35, whereby the ducting system comprises an inlet opening 35.1 and an inlet opening 35.1' within the outer wall 33 of the canopy 31.1. The inlet openings 35.1 and 35.1' are visible in Fig. 2e.

They are positioned in a part of the outer wall 33 that is facing downwards, that prevents rain from falling into the duct system. The flow of air through the canopy 31.1 is depicted in Fig. 2c by a dashed arrow in case of the duct system for the engine air intake 11 and by a dash-dotted arrow in case of the duct system for the engine cooling. Those two duct functions are provided by the common hollow space 34 inside the canopy 31.1. The ducting system 35 comprises exhaust openings, i.e. opening 35.2 and opening 35.2', within the inner wall 32 of the canopy 31.1. The exhaust openings 35.2, 35.2' are located within the horizontal area of the inner wall 32. The exhaust opening 35.2 is located above the engine and covered by a heat shield 36 which is permeable to air. The exhaust opening 35.2' is surrounded by a seal 37, which connects to an air intake 11 of the engine 10. The exhaust opening 35.2 is set up for providing cooling air to the surrounding of the engine 10, whereas the exhaust opening 35.2' is set up to specifically direct air into the air intake 11 of the engine 10. The inlet openings 35.1, 35.1' are located on one end of the ground power unit 1, wherein this one end is vis-à-vis an other end of the ground power unit 1, wherein the other end of the ground power unit 1 comprises a housing exhaust, set up for letting escape used air out of the housing 30. Ventilator 60, arranged at the housing exhaust, is set up for propelling used air out of the housing 30.

The GPU 1 further comprises a fuel tank 50, wherein the fuel tank 50 comprises a wall 51 that forms at least one channel 52 that allows air to pass from one side 50.1 of the tank to another side 50.2 of the fuel tank 50. The wall 51 of the fuel tank 50 is surrounding the channel 52 except for an inlet opening 52.1 and an outlet opening 52.2 of the channel 52. The channel 52 has an inlet on the bottom side of the fuel tank 50, which is the side 50.1, and an outlet on the top side of the fuel tank 50, which is the side 50.2. The channel 52 is located in the tank 50 at a position that is below and at one side of the generator 20 such that the generator 20 is in between the channel 52 and a ventilator 60 of the liquid cooling aggregate and therefore, an air stream will hit the generator 20. The channel 52 is furthermore positioned precisely at a generator 20 air intake. In Fig. 2c, the air flow due to the channel 22 is depicted by dashed arrows.

With this invention, a better canopy for a GPU is provided. The use of double walls increases security and reduces sound transmission and it allows to use the space in between the walls for other functions like cable trimming or guided air circulation. Furthermore, when combining the canopy with a fuel tank, preferably also rotor molded/cast, with an integrated channel, a very effective air management in the housing is possible. The subject matter described in this application (applicant's reference 65756) is also connected to further inventions, described in two additional applications marked with applicant's reference 65755 and 65757, which are hereby incorporated by reference.

### Reference signs

- 1: ground power unit
- 10: engine
- 11: air intake
- 20: generator
- 30: housing
- 31: rotor molded or rotor cast component
- 31.1: canopy
- 32: inner wall
- 33: outer wall
- 34: hollow space
- 35: ducting system
- 35.1: inlet opening
- 35.2: exhaust opening
- 36: heat shield
- 37: seal
- 50: fuel tank
- 50.1: one side of fuel tank
- 50.2: other side of fuel tank
- 51: wall
- 52: channel
- 52.1: inlet opening
- 52.2: outlet opening
- 60: ventilator of the liquid cooling aggregate

## Claims

1. Mobile ground power unit (1) for supplying power to an aircraft parked on the ground, the ground power unit (1) standing on wheels and being set up to output 28 V of direct current and/or 115 V 400 Hz of alternating current, comprising
- an engine (10) and
- an electric generator (20), whereby the electric generator (20) is configured to be driven by the engine (10),
- a housing (30) whereby the engine (10) and the electric generator (20) are disposed within the housing (30), wherein the housing is a group of components that surrounds the engine and/or the generator at least partially and features as a component (31)
- a canopy (31.1) having an outer wall (33) facing outside the housing (30), wherein the outer wall (33) is having at least one area consisting of a single piece that is covering an upper side of the engine (10) and that extends downwards along at least two different vertical sides of the ground power unit (1),
**characterized in that**
the canopy (31.1) comprises an inner wall (32) facing inside the housing (30), wherein the inner wall (32) features a horizontal area covering the upper side of the engine (10) and is extending from said horizontal area downwards along the at least two different vertical sides of the ground power unit (1), wherein the inner wall (32) and the outer wall (33) define a hollow space (34) between each other, wherein the canopy (31.1) comprises an integrated ducting system (35), whereby the ducting system (35) comprises an inlet opening (35.1, 35.1') within the outer wall (33) of the canopy (31.1), whereby the hollow space (34) constitutes an air channel for exchanging fluid between the inside and the outside of the housing (30).

2. Ground power unit (1) according to claim 1, wherein the inner wall (32) is extending from the horizontal area downwards along at least one vertical side of the ground power unit (1).

3. Ground power unit (1) according to one of the claims 1 to 2, wherein the inner wall (32) is opposing the outer wall (33) on more than 75 % of the outer wall's (33) inner surface area.

4. Ground power unit (1) according to one of the claims 1 to 3, wherein the canopy (31.1) consists of one single piece.

5. Ground power unit (1) according to one of the claims 1 to 4, wherein the canopy (31.1) is configured to slide on a chassis or on another housing part or a part of the ground power unit (1) so as to be retractable by a sliding movement.

6. Ground power unit (1) according to one of the previous claims, wherein the ducting system (35) comprises at least one exhaust opening (35.2, 35.2') within the inner wall (32) of the canopy.

7. Ground power unit (1) according to claim 6, wherein the exhaust opening (35.2, 35.2') is located within the horizontal area of the inner wall (32).

8. Ground power unit (1) according to one of the claims 6 to 7, wherein the inlet opening (35.1, 35.1') and the exhaust opening (35.2, 35.2') are offset from each other.

9. Ground power unit (1) according to one of the claims 6 to 8, wherein the exhaust opening (35.2) is covered by a heat shield (36) which is permeable to air.

10. Ground power unit (1) according to one of the claims 6 to 9, wherein the ducting system (35) comprises at least two exhaust openings (35.2, 35.2'), wherein one of the exhaust openings (35.2) is set up for providing cooling air to the surrounding of the engine (10), whereas another of the exhaust openings (35.2') is set up to specifically direct air into the air intake (11) of the engine (10).

11. Ground power unit (1) according to one of the previous claims, wherein the inlet opening (35.1, 35.1') is located on one end of the ground power unit (1), wherein this one end is vis-à-vis an other end of the ground power unit (1), wherein the other end of the ground power unit (1) comprises a housing exhaust, set up for letting escape used air out of the housing (30).

12. Ground power unit (1) according to one of the previous claims, wherein the ground power unit (1) comprises a fuel tank (50), wherein the fuel tank (50) comprises a wall (51) that forms at least one channel (52) that allows air to pass from one side (50.1) of the fuel tank (50) to another side (50.2) of the fuel tank (50).

13. Canopy (31.1) as a component (31) of a housing (30) for a ground power unit (1) wherein the ground power unit (1) is standing on wheels and being set up to output 28 V of direct current and/or 115 V 400 Hz of alternating current and comprises
- an engine (10) and
- an electric generator(20), wherein the electric generator (20) is configured to be driven by the engine(10),
wherein the canopy (31.1) is having an outer wall (33) configured to face outside the housing (30), wherein the housing (30) is a group of components that surrounds the engine and/or the generator at least partially and, wherein the outer wall (33) is having at least one area consisting of a single piece configured to cover an upper side of the engine (10) and to extend downwards along at least two different vertical sides of the ground power unit (1),
**characterized in that**
the canopy (31.1) comprises an inner wall (32) configured to face inside the housing (30),
wherein the inner wall (32) features a horizontal area configured for covering the upper side of the engine (10) and is set up for extending from said horizontal area downwards along the at least two different vertical sides of the ground power unit (1), wherein the inner wall (32) and the outer wall (33) define a hollow space (34) between each other, wherein the canopy (31.1) comprises an integrated ducting system (35), whereby the ducting system (35) comprises an inlet opening (35.1, 35.1') within the outer wall (33) of the canopy (31.1), whereby the hollow space (34) constitutes an air channel configured for exchanging fluid between the inside and the outside of the housing (30).

## Patentansprüche

1. Mobiles Bodenstromaggregat (1) zur Stromversorgung eines auf dem Boden geparkten Flugzeugs, wobei das Bodenstromaggregat (1) auf Rädern steht und dafür eingerichtet ist, 28 V Gleichstrom und/oder 115 V, 400 Hz Wechselstrom abzugeben, und aufweist:
- eine Kraftmaschine (10) und
- einen elektrischen Generator (20), wobei der elektrische Generator (20) dafür ausgelegt ist, von der Kraftmaschine (10) angetrieben zu werden,
- ein Gehäuse (30), wobei die Kraftmaschine (10) und der elektrische Generator (20) innerhalb des Gehäuses (30) angeordnet sind, wobei das Gehäuse eine Gruppe von Komponenten ist, welche die Kraftmaschine und/oder den Generator wenigstens teilweise umgibt und als eine Komponente (31) aufweist:
- eine Haube (31.1) mit einer Außenwand (33), die bezüglich des Gehäuses (30) nach außen gewandt ist, wobei die Außenwand (33) wenigstens einen aus einem einzigen Stück bestehenden Bereich aufweist, welcher eine Oberseite der Kraftmaschine (10) bedeckt und welcher sich entlang von wenigstens zwei verschiedenen vertikalen Seiten des Bodenstromaggregats (1) nach unten erstreckt,
**dadurch gekennzeichnet, dass**
die Haube (31.1) eine Innenwand (32) aufweist, die dem Inneren des Gehäuses (30) zugewandt ist, wobei die Innenwand (32) einen horizontalen Bereich aufweist, der die Oberseite der Kraftmaschine (10) bedeckt und sich von diesem horizontalen Bereich nach unten entlang den wenigstens zwei verschiedenen vertikalen Seiten des Bodenstromaggregats (1) verlängert, wobei die Innenwand (32) und die Außenwand (33) zwischen sich einen Hohlraum (34) definieren, wobei die Haube (31.1) ein integriertes Kanalsystem (35) aufweist, wobei das Kanalsystem (35) eine Einlassöffnung (35.1, 35.1') innerhalb der Außenwand (33) der Haube (31.1) aufweist, wobei der Hohlraum (34) einen Luftkanal zum Austauschen von Fluid zwischen dem Inneren und außerhalb des Gehäuses (30) bildet.

2. Bodenstromaggregat (1) nach Anspruch 1, wobei sich die Innenwand (32) von dem horizontalen Bereich nach unten entlang wenigstens einer vertikalen Seite des Bodenstromaggregats (1) erstreckt.

3. Bodenstromaggregat (1) nach einem der Ansprüche 1 bis 2, wobei die Innenwand (32) der Außenwand (33) auf mehr als 75 % der Fläche der Innenseite der Außenwand (33) gegenüberliegt.

4. Bodenstromaggregat (1) nach einem der Ansprüche 1 bis 3, wobei die Haube (31.1) aus einem einzigen Stück besteht.

5. Bodenstromaggregat (1) nach einem der Ansprüche 1 bis 4, wobei die Haube (31.1) dafür ausgelegt ist, auf einem Fahrgestell oder einem anderen Gehäuseteil oder einem Teil des Bodenstromaggregats (1) zu gleiten, sodass sie durch eine Gleitbewegung zurückschiebbar ist.

6. Bodenstromaggregat (1) nach einem der vorhergehenden Ansprüche, wobei das Kanalsystem (35) wenigstens eine Auslassöffnung (35.2, 35.2') innerhalb der Innenwand (32) der Haube aufweist.

7. Bodenstromaggregat (1) nach Anspruch 6, wobei die Auslassöffnung (35.2, 35.2') innerhalb des horizontalen Bereichs der Innenwand (32) angeordnet ist.

8. Bodenstromaggregat (1) nach einem der Ansprüche 6 bis 7, wobei die Einlassöffnung (35.1, 35.1') und die Auslassöffnung (35.2, 35.2') zueinander versetzt sind.

9. Bodenstromaggregat (1) nach einem der Ansprüche 6 bis 8, wobei die Auslassöffnung (35.2) von einem Hitzeschild (36) bedeckt ist, welcher luftdurchlässig ist.

10. Bodenstromaggregat (1) nach einem der Ansprüche 6 bis 9, wobei das Kanalsystem (35) wenigstens zwei Auslassöffnungen (35.2, 35.2') aufweist, wobei eine der Auslassöffnungen (35.2) dafür eingerichtet ist, der Umgebung der Kraftmaschine (10) Kühlluft zuzuführen, während eine andere der Auslassöffnungen (35.2') dafür eingerichtet ist, speziell Luft in den Lufteinlass (11) der Kraftmaschine (10) zu leiten.

11. Bodenstromaggregat (1) nach einem der vorhergehenden Ansprüche, wobei die Einlassöffnung (35.1, 35.1') an einem Ende des Bodenstromaggregats (1) angeordnet ist, wobei sich dieses eine Ende gegenüber einem anderen Ende des Bodenstromaggregats (1) befindet, wobei das andere Ende des Bodenstromaggregats (1) einen Gehäuseauslass aufweist, der dafür eingerichtet ist, Abluft aus dem Gehäuse (30) entweichen zu lassen.

12. Bodenstromaggregat (1) nach einem der vorhergehenden Ansprüche, wobei das Bodenstromaggregat (1) einen Kraftstofftank (50) aufweist, wobei der Kraftstofftank (50) eine Wand (51) aufweist, welche wenigstens einen Kanal (52) bildet, welcher ermöglicht, dass Luft von einer Seite (50.1) des Kraftstofftanks (50) zu einer anderen Seite (50.2) des Kraftstofftanks (50) strömt.

13. Haube (31.1) als eine Komponente (31) eines Gehäuses (30) für ein Bodenstromaggregat (1), wobei das Bodenstromaggregat (1) auf Rädern steht und dafür eingerichtet ist, 28 V Gleichstrom und/oder 115 V, 400 Hz Wechselstrom abzugeben, und aufweist:
- eine Kraftmaschine (10) und
- einen elektrischen Generator (20), wobei der elektrische Generator (20) dafür ausgelegt ist, von der Kraftmaschine (10) angetrieben zu werden,
wobei die Haube (31.1) eine Außenwand (33) aufweist, die dafür ausgelegt ist, bezüglich des Gehäuses (30) nach außen gewandt zu sein, wobei das Gehäuse (30) eine Gruppe von Komponenten ist, welche die Kraftmaschine und/oder den Generator wenigstens teilweise umgibt, und wobei die Außenwand (33) wenigstens einen aus einem einzigen Stück bestehenden Bereich aufweist, der dafür ausgelegt ist, eine Oberseite der Kraftmaschine (10) zu bedecken und sich entlang von wenigstens zwei verschiedenen vertikalen Seiten des Bodenstromaggregats (1) nach unten zu erstrecken,
**dadurch gekennzeichnet, dass**
die Haube (31.1) eine Innenwand (32) aufweist, die dafür ausgelegt ist, dem Inneren des Gehäuses (30) zugewandt zu sein, wobei die Innenwand (32) einen horizontalen Bereich aufweist, der dafür ausgelegt ist, die Oberseite der Kraftmaschine (10) zu bedecken, und dafür eingerichtet ist, sich von diesem horizontalen Bereich nach unten entlang den wenigstens zwei verschiedenen vertikalen Seiten des Bodenstromaggregats (1) zu verlängern, wobei die Innenwand (32) und die Außenwand (33) zwischen sich einen Hohlraum (34) definieren, wobei die Haube (31.1) ein integriertes Kanalsystem (35) aufweist, wobei das Kanalsystem (35) eine Einlassöffnung (35.1, 35.1') innerhalb der Außenwand (33) der Haube (31.1) aufweist, wobei der Hohlraum (34) einen Luftkanal bildet, der dafür ausgelegt ist, Fluid zwischen dem Inneren und außerhalb des Gehäuses (30) auszutauschen.

## Revendications

1. Unité génératrice au sol mobile (1) pour fournir de l'électricité à un aéronef garé au sol, laquelle unité génératrice au sol (1) est montée sur roues et est conçue pour émettre un courant continu 28 V et/ou un courant alternatif 115 V à 400 Hz, et comprend :
- un moteur (1) ; et
- un générateur électrique (20), lequel générateur électrique (20) est conçu pour être entraîné par le moteur (10) ;
- un boîtier (30), le moteur (10) et le générateur électrique (20) étant disposés dans le boîtier (30), et le boîtier étant un groupe de composants entourant le moteur et/ou le générateur au moins partiellement, et comprenant comme composant (31) ;
- un capot (31.1) possédant une paroi externe (33) orientée vers l'extérieur du boîtier (30), laquelle paroi externe (33) comprend au moins une zone consistant en une seule pièce qui couvre un côté supérieur du moteur (10) et s'étend vers le bas le long d'au moins deux côtés verticaux différents de l'unité génératrice au sol (1) ;
**caractérisée en ce que :**
- le capot (31.1) comprend une paroi interne (32) orientée vers l'intérieur du boîtier (30), laquelle paroi interne (32) comprend une zone horizontale couvrant le côté supérieur du moteur (10) et s'étend depuis la zone horizontale vers le bas le long desdits au moins deux côtés verticaux différents de l'unité génératrice au sol (1), dans laquelle la paroi interne (32) et la paroi externe (33) définissent un espace creux (34) entre elles, dans laquelle le capot (31.1) comprend un système de conduit intégré (35), le système de conduit (35) comprenant une ouverture d'entrée (35.1, 35.1') dans la paroi externe (33) du capot (31.1), tandis que l'espace creux (34) constitue un canal d'air pour échanger un fluide entre l'intérieur et l'extérieur du boîtier (30).

2. Unité génératrice au sol (1) selon la revendication 1, dans laquelle la paroi interne (32) s'étend depuis la zone horizontale vers le bas le long d'au moins un côté vertical de l'unité génératrice au sol (1).

3. Unité génératrice au sol (1) selon l'une des revendications 1 à 2, dans laquelle la paroi interne (32) est opposée à la paroi externe (33) sur plus de 75% de la superficie interne de la paroi externe (33).

4. Unité génératrice au sol (1) selon l'une des revendications 1 à 3, dans laquelle le capot (31.1) est fait d'une seule pièce.

5. Unité génératrice au sol (1) selon l'une des revendications 1 à 4, dans laquelle le capot (31.1) est conçu pour coulisser sur un châssis ou sur une autre partie de boîtier ou une partie de l'unité génératrice au sol (1) de manière à être rétractable par un mouvement coulissant.

6. Unité génératrice au sol (1) selon l'une des revendications précédentes, dans laquelle le système de conduit (35) comprend au moins une ouverture d'évacuation (35.2, 35.2') dans la paroi interne (32) du capot.

7. Unité génératrice au sol (1) selon la revendication 6, dans laquelle l'ouverture d'évacuation (35.2, 35.2') se situe dans la zone horizontale de la paroi interne (32).

8. Unité génératrice au sol (1) selon l'une des revendications 6 à 7, dans laquelle l'ouverture d'entrée (35.1, 35.1') et l'ouverture d'évacuation (35.2, 35.2') sont décalées l'une par rapport à l'autre.

9. Unité génératrice au sol (1) selon l'une des revendications 6 à 8, dans laquelle l'ouverture d'évacuation (35.2) est couverte par un bouclier thermique (36) perméable à l'air.

10. Unité génératrice au sol (1) selon l'une des revendications 6 à 9, dans laquelle le système de conduit (35) comprend au moins deux ouvertures d'évacuation (35.2, 35.2'), une des ouvertures d'évacuation (35.2) servant à fournir de l'air de refroidissement à l'environnement du moteur (10) tandis que l'autre ouverture d'évacuation (35.2') sert à diriger spécifiquement de l'air vers l'admission (11) du moteur (10).

11. Unité génératrice au sol (1) selon l'une des revendications précédentes, dans laquelle l'ouverture d'entrée (35.1, 35.1') se situe sur une extrémité de l'unité génératrice au sol (1), laquelle extrémité est vis-à-vis d'une autre extrémité de l'unité génératrice au sol (1), l'autre extrémité de l'unité génératrice au sol (1) comprend une évacuation de boîtier conçue pour évacuer l'air utilisé hors du boîtier (30).

12. Unité génératrice au sol (1) selon l'une des revendications précédentes, laquelle unité génératrice au sol (1) comprend un réservoir de carburant (50), le réservoir de carburant (50) comprenant une paroi (51) qui forme au moins un canal (52) permettant à l'air de passer d'un côté (50.1) du réservoir de carburant (50) vers un autre côté (50.2) du réservoir de carburant (50).

13. Capot (31.1) servant de composant (31) d'un boîtier (30) pour une unité génératrice au sol (1), laquelle unité génératrice au sol (1) est montée sur roues et est conçue pour émettre un courant continu 28 V et/ou un courant alternatif 115 V à 400 Hz, et comprend :
- un moteur (10) ; et
- un générateur électrique (20), lequel générateur électrique (20) est conçu pour être entraîné par le moteur (10) ;
dans lequel le capot (31.1) comprend une paroi externe (33) orientée vers l'extérieur du boîtier (30), le boîtier (30) étant un groupe de composants entourant le moteur et/ou le générateur au moins partiellement, et dans lequel la paroi externe (33) comprend au moins une zone consistant en une seule pièce qui couvre un côté supérieur du moteur (10) et s'étend vers le bas le long d'au moins deux côtés verticaux différents de l'unité génératrice au sol (1) ;
**caractérisé en ce que :**
le capot (31.1) comprend une paroi interne (32) orientée vers l'intérieur du boîtier (30), laquelle paroi interne (32) comprend une zone horizontale couvrant le côté supérieur du moteur (10) et s'étend depuis la zone horizontale vers le bas le long desdits au moins deux côtés verticaux différents de l'unité génératrice au sol (1), dans lequel la paroi interne (32) et la paroi externe (33) définissent un espace creux (34) entre elles, dans lequel le capot (31.1) comprend un système de conduit intégré (35), le système de conduit (35) comprenant une ouverture d'entrée (35.1, 35.1') dans la paroi externe (33) du capot (31.1), tandis que l'espace creux (34) constitue un canal d'air pour échanger un fluide entre l'intérieur et l'extérieur du boîtier (30).
